# EUROPÄISCHE PATENTANMELDUNG

(11) **EP 3 244 088 A1**
(43) Veröffentlichungstag der Anmeldung: **15.11.2017**
(21) Anmeldenummer: 16168959.1
(22) Anmeldetag: 10.05.2016
(51) Int. Cl.: F16F 1/04

(54) **VERFAHREN UND VORRICHTUNG ZUM WARMSETZEN VON EINER FEDER**

(71) Anmelder: Baumann Federn AG, 8734 Ermenswil (CH)
(72) Erfinder: HOHL, Andreas, 8630 Rüti (CH)
(74) Vertreter: Troesch Scheidegger Werner AG

(57) **Zusammenfassung**

Die Erfindung betrifft ein Verfahren zum Warmsetzen von wenigstens einer Feder (12). Das Verfahren umfasst die Schritte: a) Erwärmen der Feder (12) in einem entspannten Zustand mittels elektromagnetischer Induktion auf eine vorbestimmte Warmsetztemperatur, b) Spannen der Feder (12) auf eine gewünschte Setzlänge innerhalb einer vorbestimmten Zeitdauer, c) Halten der Feder (12) auf der Setzlänge für eine vorbestimmte Zeitdauer, und d) Abkühlen und Entspannen der Feder (12) in beliebiger Reihenfolge.

## Beschreibung

Die vorliegende Erfindung betrifft ein Verfahren und eine Vorrichtung zum Warmsetzen von einer Feder.

Ein bekanntes Verfahren bei der Herstellung von Federn betrifft das Warmsetzen.

Unter Warmsetzen wird ein Vorsetzen von einer Feder verstanden, d.h. eine über deren Fliessgrenze hinausgehende Beanspruchung. Durch das Warmsetzen wird ein bevorzugter Eigenspannungszustand im Federdraht erzeugt, der zur Erhöhung der statischen und dynamischen Belastbarkeit der Feder beiträgt und deren Relaxations- und Kriechverhalten verbessert. Das Warmsetzen ist ein bekanntes Verfahren zur Verbesserung des Relaxationsverhalten von Federn und wird bei erhöhter Betriebstemperatur durchgeführt.

Beim Warmsetzen wird die Feder im freien Zustand, d.h. weder gestaucht noch gestreckt, in einem Ofen erwärmt. Anschliessend wird die Feder in eine Setzvorrichtung transferiert. In der Setzvorrichtung wird die Feder auf eine definierte Setzlänge gespannt, welche z.B. gleich der Blocklänge ist. Die Blocklänge ist die Länge einer Feder wenn sie vollständig zusammengedrückt ist und keinen Zwischenraum zwischen den Federwindungen mehr aufweist. Die Feder wird in der definierten Setzlänge eine vorbestimmte, in der Regel kurze Zeit gehalten, anschliessend entweder abgekühlt und entspannt oder entspannt und anschliessend abgekühlt.

Nachteile beim Warmsetzen sind die Notwendigkeit nach einem grossen Ofen mit einem hohen Wärmeverlust. Ferner nachteilhaft ist der Wärmeverlust der Feder beim Transfer vom Ofen in die Setzeinheit, wobei der Wärmeverlust insbesondere bei Federn mit geringem Wärmeinhalt schwierig zu kontrollieren ist.

Die Aufgabe der vorliegenden Erfindung besteht darin, ein Verfahren und eine Vorrichtung zum Warmsetzen von einer Feder anzugeben, welche die vorstehend genannten Nachteile nicht aufweisen.

Diese Aufgabe wird durch ein Verfahren zum Warmsetzen von einer Feder mit den Merkmalen gemäss Anspruch 1 gelöst. Vorteilhafte Ausführungsformen sind in weiteren Ansprüchen angegeben.

Erfindungsgemäss umfasst ein Verfahren zum Warmsetzen von wenigstens einer Feder die Schritte: a) Erwärmen der Feder in einem entspannten Zustand mittels elektromagnetischer Induktion auf eine vorbestimmte Warmsetztemperatur, b) Spannen der Feder auf eine gewünschte Setzlänge innerhalb einer vorbestimmten Zeitdauer, c) Halten der Feder auf der Setzlänge für eine vorbestimmte Zeitdauer, und d)Abkühlen und Entspannen der Feder in beliebiger Reihenfolge.

Ein Vorteil des erfindungsgemässen Verfahrens liegt im besonders niedrigen Wärmeverlust. Hierdurch kann Energie eingespart werden. Bei dem vorgestellten Verfahren wird das Warmsetzen mit dem Prozess der induktiven Erwärmung kombiniert. Hierbei wird die Temperatur der Feder so gesteuert, dass hohe Anforderungen hinsichtlich der Qualität des Verfahrens und des daraus resultierenden Produkts erfüllt werden. Somit wird die Feder im entspannten Zustand mittels Induktion auf die vorbestimmte Temperatur erwärmt und anschliessend in einer Setzvorrichtung auf die definierte Länge gespannt. Anschliessend wird die Feder über eine vorbestimmte Zeitdauer gehalten. Diese Zeitdauer ist relativ kurz und bewegt sich im Sekundenbereich.

In einer Ausführungsform umfasst der Schritt d) die Schritte: d1) Abkühlen der Feder im gespannten Zustand auf Umgebungstemperatur, und d2) Entspannen der Feder.

In einer alternativen Ausführungsform umfasst der Schritt d) die Schritte: d1) Entspannen der Feder im erwärmten Zustand, und d2) Abkühlen der Feder im entspannten Zustand auf Umgebungstemperatur.

In einer Ausführungsform umfasst das Verfahren ferner die Schritte: Stauchen der Feder nach der induktiven Erwärmung auf die definierte Setzlänge, und Halten der Feder auf der definierten Setzlänge innerhalb einer vorbestimmten Zeitdauer.

Vorzugsweise ist die definierte Setzlänge eine beliebige Länge, insbesondere eine Blocklänge der Feder.

Vorzugsweise wird die Feder durch eine Induktionseinrichtung erwärmt, welche eine Spule umfasst, wobei die Spule und Feder relativ zueinander in Längsrichtung derart bewegt werden, dass die Feder wenigstens abschnittsweise erwärmt wird. Die Feder kann durch eine kürzere Spule der Induktionseinrichtung zuverlässig erwärmt werden, indem Feder und Spule in Relation zueinander linear bewegt werden.

Vorzugsweise wird die Feder wenigstens im Verlaufe der Erwärmung innerhalb einer vorbestimmten Zeitdauer um ihre Längsachse rotiert. Somit wird die Feder auf einfache und zuverlässige Art und Weise gleichmässig erwärmt. Der Energieaufwand hierzu ist sehr gering gehalten.

Vorzugsweise wird die Feder in einer Setzvorrichtung erwärmt oder ausserhalb der Setzvorrichtung erwärmt und anschliessend in die Setzvorrichtung transferiert.

Eine erfindungsgemässe Vorrichtung zum Warmsetzen von wenigstens einer Feder durch ein Verfahren nach einem der Ansprüche 1 bis 8 umfasst eine Induktionseinrichtung zum Erwärmen der Feder mittels elektromagnetischer Induktion auf eine vorbestimmte Warmsetztemperatur.

In einer Ausführungsform umfasst die Induktionseinrichtung eine Spule mit einer Mehrzahl von Windungen.

In einer Ausführungsform umfasst die Vorrichtung ferner eine Lagereinrichtung zum Lagern der Feder innerhalb der Windungen der Spule in Axialrichtung, wobei die Lagereinrichtung ausgebildet ist, die Feder in Axialrichtung zu bewegen und/oder um ihre Achse zu rotieren. Somit wird die Feder über ihre Länge hinweg umfänglich und gleichmässig erwärmt.

In einer Ausführungsform der Vorrichtung ist die Länge der Spule kürzer als die Länge der zu erwärmenden Feder, wobei die Lagereinrichtung eine Bewegungseinrichtung zum Bewegen der Spule und Feder in Relation zueinander in Längsrichtung umfasst. Durch lineares Verstellen der Feder und Spule in Relation zueinander kann die Feder gleichmässig erwärmt werden. Auch können Federn unterschiedlicher Längen erwärmt werden.

In einer alternativen Ausführungsform der Vorrichtung ist die Länge der Spule wenigstens gleich lang wie die Länge der zu erwärmenden Feder, wobei die Lagereinrichtung eine Halteeinrichtung zum in Längsrichtung fixierten Halten der Spule und Feder in Relation zueinander umfasst.

In einer alternativen Ausführungsform der Vorrichtung umfasst die Induktionseinrichtung eine Induktionsplatte, deren Länge wenigstens gleich der Länge der Feder ist, wobei die Vorrichtung ferner umfasst: eine Bewegungseinrichtung zum Bewegen der Feder über die Induktionsplatte in Querrichtung, und eine Rotationseinrichtung zum Rotieren der Feder um ihre Längsachse.

In einer Ausführungsform der Vorrichtung operiert die Induktionseinrichtung im Mittel- oder Hochfrequenzbereich. Somit ist eine zuverlässige Erwärmung der Feder ermöglicht.

Es wird ausdrücklich darauf hingewiesen, dass die vorstehenden Ausführungsformen beliebig kombinierbar sind. Lediglich diejenigen Kombinationen von Ausführungsformen sind ausgeschlossen, die durch die Kombination zu Widersprüchen führen würden.

Im Folgenden wird die vorliegende Erfindung anhand von einem in der Zeichnung dargestellten Ausführungsbeispiel weiter erläutert. Dabei zeigt:

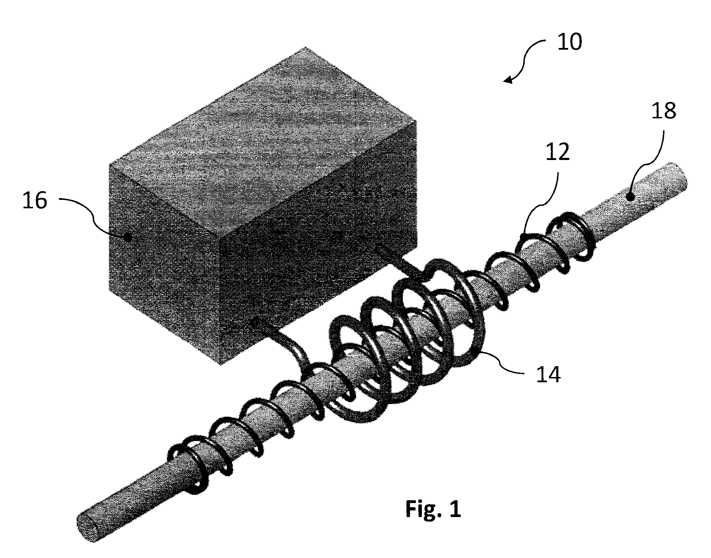

- Fig. 1: eine schematische Ansicht von einer Induktionseinrichtung.

Fig. 1 zeigt eine schematische Ansicht von einer Induktionseinrichtung 10 zum Warmsetzen von einer Feder 12 auf eine vorbestimmte Warmsetztemperatur mittels elektromagnetischer Induktion. Die Induktionseinrichtung 10 umfasst eine Spule 14 mit vier Windungen, durch welche ein von einer Stromversorgung 16 zugeführter Strom fliesst. Die Feder 12 ist innerhalb der Windungen der Spule 14 in deren Axialrichtung angeordnet und durch eine Lagereinrichtung 18 gelagert. Hierbei ist die Feder 12 auf die Lagereinrichtung 18 aufgesteckt. Die Lagereinrichtung 18 kann die Feder 12 in Axialrichtung bewegen und/oder um ihre Achse rotieren. Die Lagereinrichtung kann, wie in der Figur 1 gezeigt, ein Dorn sein, welcher die Feder 12 am Innendurchmesser führt. Die Feder 12 kann aber auch mit einer Hülse (nicht gezeigt) geführt werden, wobei in diesem Beispiel die Feder in der Hülse am Aussendurchmesser geführt wird. Weiter alternativ kann die Feder zwischen zwei parallelen Platten an den beiden Enden geführt sein.

In der gezeigten Ausführungsform ist die Spule 14 kürzer als die zu erwärmende Feder 12. Zur gleichmässigen Erwärmung kann die Lagereinrichtung 18 mittels einer Bewegungseinrichtung (nicht gezeigt) in Relation zur fixierten Spule 14 in Axialrichtung bewegt werden. Alternativ kann die Spule 14 in Relation zur fixierten Feder 12 in Axialrichtung bewegt werden. Obwohl nicht gezeigt, kann die Spule 14 wenigstens die gleiche Länge der zu erwärmenden Feder 12 haben. Die Induktionseinrichtung 10 kann im Mittel- oder Hochfrequenzbereich operieren.

In einem Verfahren zum Warmsetzen der Feder 12 wird diese in einem entspannten Zustand mittels elektromagnetischer Induktion durch die Spule 14 auf eine vorbestimmte Warmsetztemperatur erwärmt. Anschliessend wird die Feder 12 innerhalb einer vorbestimmten Zeitdauer auf die vorbestimmte Länge gefahren und eine weitere vorbestimmte Zeit in dieser Länge gehalten. Hiernach wird die Feder 12 abgekühlt und nachfolgend entspannt. Alternativ kann die Feder 12 zunächst entspannt und nachfolgend im entspannten Zustand abgekühlt werden.

Vorteilhafterweise wird das Warmsetzen der Feder 12 mit der induktiven Erwärmung kombiniert. Somit kann die Temperatur der Feder 12 derart eingestellt werden, dass hohe Anforderungen hinsichtlich der Qualität der resultierenden Feder 12 erfüllt werden. Die Feder 12 wird im entspannten Zustand mittels Induktion, welche durch den durch die Spule 14 fliessenden Strom und die Feder 12 selber hervorgerufen wird, auf die vorbestimmte Temperatur erwärmt und anschliessend in einer Setzvorrichtung (nicht gezeigt) auf eine definierte Länge gespannt. Anschliessend wird die Feder 12 über eine kurze Zeitdauer gehalten. Hieran anschliessend kann die Feder 12 zuerst mit einem Medium abgekühlt und anschliessend entspannt werden. Alternativ kann die Feder 12 zuerst entspannt und anschliessend abgekühlt werden.

## Patentansprüche

1. Verfahren zum Warmsetzen von wenigstens einer Feder (12), umfassend die Schritte:
a) Erwärmen der Feder (12) in einem entspannten Zustand mittels elektromagnetischer Induktion auf eine vorbestimmte Warmsetztemperatur,
b) Spannen der Feder (12) auf eine gewünschte Setzlänge innerhalb einer vorbestimmten Zeitdauer,
c) Halten der Feder (12) auf der Setzlänge für eine vorbestimmte Zeitdauer, und
d) Abkühlen und Entspannen der Feder (12) in beliebiger Reihenfolge.

2. Verfahren nach Anspruch 1, wobei der Schritt d) die Schritte umfasst:
d1) Abkühlen der Feder (12) im gespannten Zustand auf Umgebungstemperatur, und
d2) Entspannen der Feder (12).

3. Verfahren nach Anspruch 1, wobei der Schritt d) die Schritte umfasst:
d1) Entspannen der Feder (12) im erwärmten Zustand, und
d2) Abkühlen der Feder (12) im entspannten Zustand auf Umgebungstemperatur.

4. Verfahren nach einem der Ansprüche 1 bis 3, ferner umfassend die Schritte:
- Stauchen der Feder (12) nach der induktiven Erwärmung auf die definierte Setzlänge, und
- Halten der Feder (12) auf der definierten Setzlänge innerhalb einer vorbestimmten Zeitdauer.

5. Verfahren nach Anspruch 4, bei welchem die definierte Setzlänge eine beliebige Länge ist, insbesondere eine Blocklänge der Feder (12).

6. Verfahren nach einem der vorhergehenden Ansprüche, bei welchem die Feder (12) durch eine Induktionseinrichtung (10) erwärmt wird, welche eine Spule (14) umfasst, wobei die Spule (14) und Feder (12) relativ zueinander in Längsrichtung derart bewegt werden, dass die Feder (12) wenigstens abschnittsweise erwärmt wird.

7. Verfahren nach einem der vorhergehenden Ansprüche, bei welchem die Feder (12) wenigstens im Verlaufe der Erwärmung innerhalb einer vorbestimmten Zeitdauer um ihre Längsachse rotiert wird.

8. Verfahren nach einem der vorhergehenden Ansprüche, bei welchem die Feder (12) in einer Setzvorrichtung erwärmt wird oder ausserhalb der Setzvorrichtung erwärmt wird und anschliessend in die Setzvorrichtung transferiert wird.

9. Vorrichtung zum Warmsetzen von wenigstens einer Feder (12) durch ein Verfahren nach einem der vorhergehenden Ansprüche, wobei die Vorrichtung umfasst:
eine Induktionseinrichtung (10) zum Erwärmen der Feder (12) mittels elektromagnetischer Induktion auf eine vorbestimmte Warmsetztemperatur.

10. Vorrichtung nach Anspruch 9, wobei die Induktionseinrichtung (10) eine Spule (14) mit einer Mehrzahl von Windungen umfasst.

11. Vorrichtung nach Anspruch 10, ferner umfassend eine Lagereinrichtung (18) zum Lagern der Feder (12) innerhalb der Windungen der Spule (14) in Axialrichtung, wobei die Lagereinrichtung (18) ausgebildet ist, die Feder (12) in Axialrichtung zu bewegen und/oder um ihre Achse zu rotieren.

12. Vorrichtung nach Anspruch 10 oder 11, bei welcher die Länge der Spule (14) kürzer ist als die Länge der zu erwärmenden Feder (12), wobei die Lagereinrichtung (18) eine Bewegungseinrichtung zum Bewegen der Spule (14) und Feder (12) in Relation zueinander in Längsrichtung umfasst.

13. Vorrichtung nach Anspruch 10 oder 11, bei welcher die Länge der Spule (14) wenigstens gleich lang ist wie die Länge der zu erwärmenden Feder (12), wobei die Lagereinrichtung (18) eine Halteeinrichtung zum in Längsrichtung fixierten Halten der Spule (14) und Feder (12) in Relation zueinander umfasst.

14. Vorrichtung nach Anspruch 9, wobei die Induktionseinrichtung (10) eine Induktionsplatte umfasst, deren Länge wenigstens gleich der Länge der Feder (12) ist, wobei die Vorrichtung ferner umfasst:
- eine Bewegungseinrichtung zum Bewegen der Feder (12) über die Induktionsplatte in Querrichtung, und
- eine Rotationseinrichtung zum Rotieren der Feder (12) um ihre Längsachse.

15. Vorrichtung nach einem der Ansprüche 9 bis 14, wobei die Induktionseinrichtung im Mittel- oder Hochfrequenzbereich operiert.
